# EUROPEAN PATENT APPLICATION

(11) **EP 1 936 561 A1**
(43) Date of publication of application: **25.06.2008**
(21) Application number: 05782274.4
(22) Date of filing: 08.09.2005
(51) Int. Cl.: G06Q 50/00

(54) **TRADING METHOD FOR TRADING BETWEEN TRADING SYSTEMS AND TRADING SYSTEM**

(71) Applicant: Fitech Laboratories, Inc., Tokyo 104-0033 (JP)
(72) Inventor: MATSUSHIMA, Toshiyuki, Foster City California 94404 (US)
(74) Representative: Betten & Resch
(86) International application number: PCT/JP2005/016501
(87) International publication number: WO 2007/029324

(57) **Abstract**

An object of the present invention is to provide a trading method for trading a share, bond, bill, futures product, or any other of a variety of financial products between trading systems. In a case where an order to buy/sell a product as received in a first trading system is not completed within a prescribed time, an order notice is transmitted to a second trading system at a predetermined timing. The second trading system makes a search to detect whether a reverse order is present. If a reverse order is found to be present, the second trading system locks the reverse order therein, and transmits an order instruction according to the reverse order. The first trading system executes the buying/selling in response to the order instruction of an effective quantity of products of the buy/sell order at that time point, and transmits an execution result in response to the order instruction to the second trading system. The second trading system executes the buying/selling of the quantity as executed in the first system for the locked reverse order, based on the results of the execution performed by the first trading system.

## Description

### TECHNICAL FIELD

The present invention relates to a trading method and trading system for trading among a plurality of trading systems with regard to various types of financial products such as stocks, bonds, bills, futures, and the like, and other products.

### BACKGROUND ART

In recent years, on-line trading of financial products and other products via the Internet has become popular; in particular, there has been heightened interest in the trading of various types of financial products such as stocks, bonds, bills, futures and the like. For example, in regard to the on-line trading of financial products, the buying/selling of stocks via the Internet can ordinarily be accomplished, for example, during trading hours at the Tokyo Stock Exchange. Accordingly, since trading can be accomplished without going through a representative of a securities firm or the like as in the past, this system has seen a steady increase in users as a convenient system in recent years.

However, in the case of trading performed via exchanges such as the Tokyo Stock Exchange and the like, trading is ordinarily possible only during fixed hours known as trading hours (the morning session being held from 9:00 AM to 11:00 AM, and the afternoon session being held from 12:30 PM to 3:00 PM). Accordingly, for example, in the case of workers such as office workers who must be at work, a problem arises in regard to the difficulty for such workers to engage in trading while observing the action directly.

Accordingly, in order to provide such persons with greater trading opportunities, securities firms and the like other than exchanges such as the Tokyo Stock Exchange and the like have independently provided trading locations (trading systems) so the trading can be accomplished even outside the operating hours of exchanges, and trading systems for this purpose have been introduced by securities firms and the like in some cases. Representative examples of such trading systems are shown in Non-Patent Document 1 and Non-Patent Document 2.

Non-Patent Document 1: Matsui Securities Co., Ltd., "Nighttime Stock Trading (Night Market)", [Online], <URL:http://www.matsui.co.jp/yoichi/>
Non-Patent Document 2: Monex-Beans Securities Co., Ltd., "Nighttime Trading (Monex Nighter)", {online], <URL:http://www.monex.co.jp/Etc/00000000/guest/G3203/nighter/i ndex.htm>

### DISCLOSURE OF THE INVENTION

### Problems to Be Solved By the Invention

The abovementioned trading system is extremely beneficial for company employees and the like who cannot engage in daily trading when trading hours are held during business hours. On the other hand, however, this trading system merely provides a trading opportunity when various securities firms and the like are independently closed; accordingly, trading volumes are not regarded to be large. Consequently, even if orders are placed with the trading system of a certain securities firm with the aim of buying shares of a certain stock at OO yen, or selling such shares at OO yen, the possibility of completing buying/selling within this trading system is not sufficiently high.

Accordingly, even in the case of trading systems independently provided by various securities firms, there is a demand to increase the possibility of completing buying/selling.

### Means Used To Solve the Abovementioned Problems

The present inventor invented a trading method and trading system for trading among a plurality of trading systems which are devised so that in cases where reverse orders that allow buying/selling to be completed are present in other trading systems, such buying/selling can be completed with these trading systems even in cases where buying/selling cannot be completed by the trading system of the firm itself, by transmitting and receiving transaction information among trading systems independently provided by various firms.

A first aspect of the present invention is a trading method for trading between a first trading system and one or more other second trading systems for trading products, wherein the trading method is characterized in that: the first trading system transmits to the second trading system, at a specified timing, an order notice indicating that a buy/sell order is present in the first trading system in a case where the buy/sell order for the commercial product received by the first trading system is not executed within a specified time by the first trading system; the second trading system receiving the order notice from the first trading system performs a search in order to ascertain whether or not a reverse order for the order in the order notice is present in the second trading system, and, in a case where such a reverse order is present, the second trading system locks the reverse order in the second trading system, and transmits an order instruction to the first trading system according to the reverse order; the first trading system receiving the order instruction from the second trading system executes buying or selling for the order instruction in an order quantity effective at that point in time in the buy/sell order, and transmits an execution result of the order instructions to the second trading system; and the second trading system receiving the execution result from the first trading system executes buying or selling of the quantities executed by the first trading system in the locked reverse order on the basis of the execution result.

According to the trading method of the present invention, even in cases where commercial product buying/selling cannot be completed in a single trading system, it is possible in cases where reverse orders for completing such orders are present in other trading systems to complete buying/selling with these reverse orders. In this way, the possibility of a trading opportunity for users of trading systems can be increased.

Furthermore, in cases where reverse orders are present in other trading systems, it is possible to prevent these reverse orders from being executed while buying/selling is being executed by the first trading system, by providing processing that locks the reverse orders. In this way, the problem of buying/selling time lag among a plurality of trading systems can be solved.

Furthermore, by sending order notices in a non-synchronized manner, it is possible to greatly increase trading opportunities by placing orders in common with a plurality of trading systems, and it is possible to realize high performance.

A second aspect of the present invention is a trading method for trading among a plurality of trading systems, characterized in that the aforementioned second trading system receives the order notice from the first trading system; stores the order notice in a case where no reverse order is found to be present as a result of a search made for reverse orders; and performs another search in a case where a new order, an alteration of an existing order, the elapsing of a specific amount of time, or another specified event has occurred in the second trading system, in order to ascertain whether the new order or existing order is a reverse order.
By providing the processing of the present invention, it is possible to execute buying/selling in cases where reverse orders later appear even if there are no reverse orders when the second trading system initially receives an order notice.

A third aspect of the present invention is a trading method for trading among a plurality of trading systems, characterized in that the aforementioned second trading system executes buying/selling in the quantity executed by the first trading system in the locked reverse order on the basis of the execution results, and then releases the lock.

By releasing the lock following the transaction of the reverse order as in the present invention, it is possible to provide trading opportunities in cases where unfilled orders remain among the reverse orders.

A fourth aspect of the present invention is a trading method for trading among a plurality of trading systems, characterized in that the abovementioned second trading system unlocks the lock on the locked reverse order; and then executes buying/selling in the quantity executed by the first trading system in the reverse order, on the basis of the execution results.

By releasing the lock following the transaction of the reverse order as in the present invention, it is possible to provide trading opportunities in cases where unfilled orders remain among the reverse orders. Furthermore, in a point of difference from the abovementioned invention, it is also possible to perform buying/selling for the reverse order following the release of the lock.

A fifth aspect of the present invention is a method for trading among trading systems, characterized in that in a case where a plurality of buy/sell orders with the same order conditions are present in the first trading system, the first trading system groups these orders into a single order, and transmits this order as a single order notice to the second trading system.

In cases where there is a plurality of orders with the same order conditions within the same trading system as in the present invention, if these orders are separately set as order notices, the traffic is increased, and the load on the partner trading system is also increased. Accordingly, these problems can be solved by summarizing a plurality of orders with the same order conditions into a single order, and forming a single order notice as in the present invention.

A sixth aspect of the present invention is a trading method for trading among a plurality of trading systems, characterized in that when the first trading system and second trading system transmit information to a trading system that is a destination for transmitting the information, these trading systems also transmit this information to a log server.

By transmitting the communications content to a log server as well, as in the present invention, it is possible for example to recover the content in cases where communications errors or the like occur, and to solve problems. Furthermore, the location of problems can also be determined, and the problems solved, in cases where the transaction content differs between transmission source and transmission destination trading systems due to communications trouble or the like.

A seventh aspect of the present invention is a trading system for products which has an ordering system, a PTS and a gateway, characterized in that the abovementioned ordering system receives information relating to a buy/sell order for the products from a user terminal used by a user, and transfers this information to the PTS; the PTS transfers, at a specific timing, an instruction to the gateway to send an order notice indicating that the buy/sell order is present to another trading system in a case where the buying/selling of the order cannot be completed in the PTS; the gateway transmits the order notice to at least one of the other trading systems on the basis of an instruction to send the order notice, and when the result is that the gateway receives an order instruction for a reverse order with respect to the order, the PTS executes buying/selling for the order instructions at an order quantity that is effective in the buy/sell order at that point in time, and transfers an execution result for the order instruction to the gateway; and the gateway transmits the execution result to the other trading systems.

An eighth aspect of the present invention is a trading system for products which has an ordering system, a PTS and a gateway, characterized in that the abovementioned ordering system receives information relating to a buy/sell order for the product from a user terminal used by a user, and transfers this information to the PTS; the gateway receives from another trading system an order notice indicating that a reverse order for a buy/sell order is present in the other trading system; the PTS performs a search in order to ascertain whether or not a reverse order for the order notices is present, and, in a case where a reverse order is present, the PTS locks the reverse order, and transfers an order instruction based on the reverse order to the gateway; the gateway transmits the order instruction to the other trading system, and, in a case where the order instruction is transmitted to the other trading system as a result for the order notice, the gateway receives an execution result for the order instruction from the other trading system, and transfers the execution result to the PTS; and on receiving the execution result for the order instruction from the gateway, the PTS executes buying/selling in a quantity executed by the other trading systems in the locked reverse order on the basis of the execution result.

The abovementioned trading method can be used between the trading systems described in these aspects of the present invention.

A ninth aspect of the present invention is a trading system characterized in that the abovementioned PTS receives the order notice from the other trading system via the gateway; stores the order notice in a case where no reverse order is found to be present as a result of a search for a reverse order; and performs another search in a case where a new order, an alteration of an existing order, the elapsing of a specific amount of time, or another specified event has occurred in the PTS, in order to ascertain whether the new order or existing order is a reverse order.

By providing the processing of the present invention, it is possible to execute buying/selling in cases where reverse orders later appear even if there are no reverse orders when the second trading system initially receives an order notice.

A tenth aspect of the present invention is a trading system characterized in that the abovementioned PTS releases the lock after executing buying/selling in the quantity executed by the other trading systems in the locked reverse order on the basis of the execution result.

By releasing the lock following the transaction of the reverse order as in this aspect of the present invention, it is possible to provide trading opportunities in cases where unfilled orders remain among the reverse orders.

An eleventh aspect of the present invention is a trading system characterized in that the abovementioned PTS executes buying/selling in the quantity executed by the other trading systems in the reverse order after releasing the lock on the locked reverse order on the basis of the execution result.

By releasing the lock following the buying/selling of the reverse order as in this aspect of the present invention, it is possible to provide trading opportunities in cases where unfilled orders remain among the reverse orders. Furthermore, in a point of difference from the abovementioned invention, it is also possible to perform buying/selling for the reverse order following the release of the lock.

A twelfth aspect of the present invention is a trading system characterized in that in a case where a plurality of buy/sell orders with the same order conditions are present in the PTS, the PTS groups these orders into a single order, and transmits this single order as a single order notice to the other trading systems.

In cases where there is a plurality of orders with the same order conditions within the same trading system as in the present invention, if these orders are separately set as order notices, the traffic is increased, and the load on the partner trading system is also increased. Accordingly, these problems can be solved by summarizing a plurality of orders with the same order conditions into a single order, and forming a single order notice as in the present invention.

A thirteenth aspect of the present invention is a trading system characterized in that when the abovementioned gateway transmits information to the gateways of the other trading systems, the gateway also transmits this information to a log server.

By transmitting the communications content to a log server by the gateway in the abovementioned trading system or the like as in the present invention, it is possible for example to recover the content in cases where communications errors or the like occur, and to solve problems. Furthermore, the location of problems can also be determined, and the problems solved, in cases where the transaction content differs between transmission source and transmission destination trading systems due to communications trouble or the like.

A fourteenth aspect of the present invention is a trading system characterized in that when transmitting information to the other trading systems, the aforementioned gateway converts the information to a predetermined communications protocol and transmits the converted information to the other trading systems; and when receiving information from the other trading systems, the aforementioned gateway converts the information to a protocol used in the trading systems, and transfers the converted information to the PTS.

Different protocols are usually used in various trading systems. Accordingly, in cases where information is transmitted to other trading systems, this information is transmitted by the gateway after being converted to a predetermined communications protocol, and in cases where information is received from other trading systems, the gateway transfers the information to the PTS after converting the information to the protocol used in the trading system in question. Accordingly, processing can be performed even if there are differences in protocol. By providing such protocol conversion processing, it is possible to execute processing between various trading systems.

### Effect of the Invention

In the present invention, even in cases where buying/selling cannot be completed in the trading system of a given firm as in the past, if reverse orders that allow buying/selling to be executed are present in other trading systems, the buying/selling can be completed with these trading systems. In this way, independent trading systems can be activated, and this also makes it possible to utilize trading systems of firm members or the like in which trading via a specified exchange is difficult during trading hours.

### BRIEF DESCRIPTION OF THE DRAWINGS

FIG. 1 is a system construction diagram showing one example of the overall system construction of the present invention; and
FIG. 2 is a processing diagram showing one example of the processing of the present invention.

### Description of the Numerical Symbols

1: Trading system
2: Ordering system
3: PTS
4: Gateway
5: Log server

### BEST MODE FOR CARRYING OUT THE INVENTION

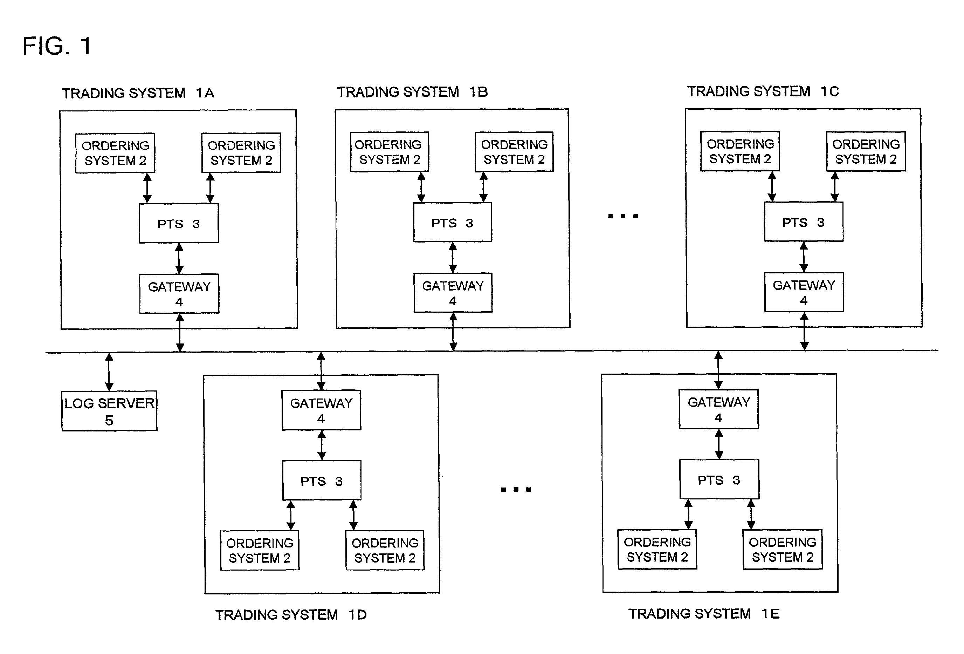

One example of the system construction of the present invention is shown in the system construction diagram of FIG. 1. FIG. 1 shows a configuration in which a plurality of trading systems can transmit and receive information to and from each other via a network such as the Internet. The trading system 1 is a system which is capable of the buying/selling of products such as financial products or the like by one or a plurality of firms. For example, this trading system may be the nighttime stock trading system of the abovementioned Matsui Securities Co., Ltd., the nighttime trading system of Monex Beans Securities Co., Ltd., or the like. Furthermore, in the following embodiments, the trading of stocks is described; however, the present invention may also be realized in the case of financial products other than stocks, or in the case of products other than financial products. Furthermore, the term "products" may refer to any goods or services that can be bought or sold via a trading system, and is not restricted.

The trading system 1 has an ordering system 2, a PTS (private trading system) 3, and a gateway 4. The ordering system 2, PTS 3, and gateway 4 that make up the trading system 1 in the present invention are each computer terminals, servers (hereafter referred to collectively as computer terminals), or the like. The computer terminals have at least an operating system such as a CPU or the like which executes the operational processing of programs, and a storage device such as a RAM, hard disk, or the like which stores information. In the case of the respective functions of the ordering system 2, PTS 3, and gateway 4, means for executing the processing (programs or modules) are read into the operating system. In cases where each of the means utilizes information stored in the storage device in their processing, this information is read out from the storage device, and the read out information is appropriately used in processing in the operating system.

The ordering system 2 is a system which receives ordering information from the user terminal (not shown) used by the user who wishes to buy or sell financial products, and transfers this information to the PTS 3. Furthermore, when buying or selling is completed, the ordering system 2 receives information indicating the completion of buying or selling from the PTS 3, and transmits this information to the user terminal.

The PTS 3 is a system which accomplishes buying/selling by recording ordering information for various users received from the ordering system 2, and matching this information. For example, in cases where a sell order for 1,000 shares of stock of firm A at 500 yen [per share] is received from a certain user 1, this is stored in the PTS 3, and when an order to buy 1,000 shares of stock of firm A is received from a user 2 via the ordering system 2, the sell order from the abovementioned user 1 and the buy order from the user 2 are matched, and the buying/selling is completed. Buying/selling is similarly performed for trades at the market price. For example, in a case where buy orders for 1,000 shares of stock of firm A at 500 yen [per share], 500 shares at 510 yen [per share], and 800 shares at 515 yen [per share] are stored in the PTS 3, if there is a market sell order for 2,000 shares of stock of firm A from a certain user 3 via the ordering system 2, these buy orders and the sell order are matched as market orders, and the buying/selling is completed. In this case, buying/selling is completed for 800 shares of stock of firm A at 515 yen [per share], 500 shares at 510 yen [per share], and 700 shares at 500 yen [per share].

Furthermore, the PTS 3 is a system which is devised so that in cases where buy/sell orders that have not yet been executed still remain in the PTS 3 at a specified timing following the passage of a specified time (in this specification, the specified time includes "0"; same below), one or a plurality of other trading systems in which reverse orders may be present are notified of the presence of orders in the PTS 3 via the gateway 4 described later. Furthermore, the term reverse order refers to an order for completing the execution of remaining orders. In cases where a sell order remains in the PTS 3, this reverse order indicates a buy order for completing the execution of this sell order, and in cases where a buy order remains in the PTS 3, this reverse order indicates a sell order for completing the execution of this buy order.

Specifically, in a case where a buy order for 10,000 shares of stock of firm X at 800 yen [per share] remains in the PTS 3 of the trading system 1A, and a specified time has elapsed, if there are reverse orders for completing the execution of this buy order for 10,000 shares of stock of firm X at 800 yen [per share] in other trading systems (in the case of FIG. 1, the trading systems 1B through 1E) at a specified timing, e.g., a sell order for 5,000 shares of stock of firm X at 800 yen [per share], or a market sell order for 5,000 shares of stock of firm X, an order notice is transmitted via the gateway 4, thus creating a possibility of executing the trade over a plurality of trading systems.

The gateway 4 is a system which actually transmits inquiries to other trading systems 1 received from the PTS 3. In this case, furthermore, inquiries may be made by conversion to a specified protocol in order to communicate with other trading systems 1. The reason for this is that processing is usually performed by different protocols in respective trading system 1, and communications cannot be performed without having been subjected to a conversion.

Furthermore, in cases where an inquiry is received as to the presence or absence of reverse orders for executing buy/sell orders such as those described above from other trading systems 1, the gateway 4 transfers the inquiry to PTS 3 inside the trading systems 1. In cases where an inquiry is transferred to the PTS 3, it is advisable that this inquiry be transferred following conversion to the protocol used in these trading systems 1.

Moreover, the PTS 3 that has received the abovementioned order notice from the gateway 4 performs a search in order to ascertain whether or not there is a reverse order for executing this buy/sell order, and in cases where there is such a reverse order, the PTS 3 locks this order. Here, the term "lock" refers to processing that is performed so that the reverse order is not executed by other orders. For example, in a case where a sell order for 1,000 shares of stock of firm X at 800 yen [per share] is received by the PTS 3 of the trading system 1A via the gateway 4 from the trading system 1B, and there is also a buy order for 2,000 shares of stock of firm X at 800 yen [per share] in the PTS 3 of the trading system 1A, since there is a reverse order in the PTS 3 of the trading system 1A, 1,000 shares are locked among the buy order for 2,000 shares of stock of firm X at 800 yen [per share]. By this locking, the execution of buying/selling for 1,000 shares by other orders is prevented.

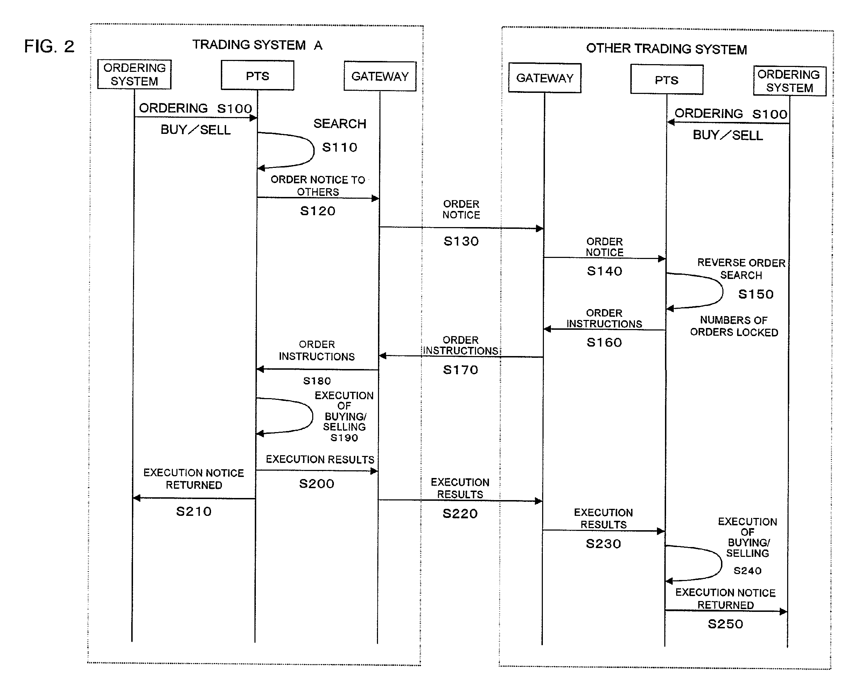

Next, one example of the processing of the present invention will be described with reference to the processing diagram shown in FIG. 2, and the system construction diagram shown in FIG. 1.

First, it is assumed that the ordering system 2 has transmitted a buy order for 2,000 shares of stock of firm X at 500 yen [per share] from the user terminal of a user 1 who can utilize the trading system 1A. The ordering system 2 receives this buy order from the user terminal, and transfers instructions for a buy order of 2,000 shares of stock of firm X at 500 yen [per share] to the PTS 3 (S100).

When the PTS 3 receives the instructions for this buy order from the ordering system 2, the PTS 3 performs a search in order to ascertain whether or not a reverse order for completing the transaction of this buy order is present within the PTS 3 (S110). Here, it is assumed that a sell order for 500 shares of stock of firm X at 500 yen [per share] is present within the PTS 3. Accordingly, the trading of 500 shares of stock of firm X is completed at 500 yen [per share] for the order of the user 1. The PTS 3 transfers the results of this completion of trading to the ordering system 2, and the ordering system 2 transfers results indicating the trading of 500 shares of stock of firm X completed at 500 yen [per share] to the user terminal of the user 1.

However, since there are still 1,500 shares for which trading has not yet been completed in the buy order of the user 1, the system waits for the completion of this transaction.

In cases where trading is still not completed after a specified time has elapsed, the PTS 3 transfers, at a specified timing, information relating to the order in question (an order notice) to the gateway 4 indicating to the other trading systems 1 (the trading systems 1B through 1E) that a reverse order for completing the buy order for 1,500 shares of stock of firm X at 500 yen [per share] is present (S120).

The gateway 4 receiving the order notice from the PTS 3 converts this order notice to a protocol that allows communication with the other trading systems 1, and transmits this order notice to the other trading systems 1 (S130).

In cases where order notices are transmitted to the other trading systems 1, these may be transmitted in a fixed order, or may be transmitted all at once. Furthermore, a trading system 1 in which trading was completed in the case of the transmission of the previous order notice may be preferentially set as the object of transmission (e.g., set first), or the rate of completion of buying/selling relative to the transmission of order notices may be recorded by the gateway 4 for each trading system 1, and the order notices may be preferentially transmitted in order with a fixed time lag from trading systems 1 with a high transaction completion rate. Moreover, the tabulation of past transaction completions, quantities traded, system performance, and the like in the trading systems 1 may be reflected, and preferential transmissions may be made in order from systems with numerous transaction completions, systems with high traded quantities, or systems with high specifications such as processing speed or the like. Furthermore, besides the setting of such a preferential order, order notices may also be transmitted randomly or without distinction to some or all of the other trading systems 1. In the present embodiment, order notices are transmitted to the trading system 1B.

When the gateway 4 of the trading system 1B receives an order notice from the gateway 4 of the trading system 1A, the gateway 4 of the trading system 1B transfers this order notice (a notice that a buy order for 1,500 shares of stock of firm X at 500 yen [per share] is present in the PTS 3 of the trading system 1A) to the PTS 3 of the trading system 1B after converting this order notice to the protocol used in the trading system 1B (S140).

When the PTS 3 of the trading system 1B receives this order notice from the gateway 4, the PTS 3 performs a search in order to ascertain whether or not there is a reverse order (S150). In cases where no such reverse order is present, this order notice is held and stored by the PTS 3.

On the other hand, in cases where there is a reverse order corresponding to the order notice in the PTS 3 of the trading system 1B in S150, this reverse order is locked. For example, in a case where there is a sell order for 1,000 shares of stock of firm X at 500 yen [per share] in the PTS 3 of the trading system 1B, this sell order is locked. Then, the PTS 3 of the trading system 1B transfers order instructions (an order) to sell 1,000 shares of stock of firm X at 500 yen [per share] to the gateway 4 (S160).

The gateway 4 of the trading system 1B receiving these order instructions transmits these order instructions (order) to the trading system 1A after converting the order instructions to a specified protocol that allows communications (S170). The gateway 4 of the trading system 1A receiving the order instructions (order) from the gateway 4 of the trading system 1B transfers the order instructions to the PTS 3 after converting the instructions to the protocol of the trading system 1A.

Since buying/selling still has not been completed for 1,500 shares of the buy order of 1,500 shares of stock of firm X at 500 yen [per share] stored from before, the PTS 3 of the trading system 1A completes a buy/sell with the order instructions received from the gateway 4 (sell 1,000 shares of stock of firm X at 500 yen [per share]) for 1,000 shares (S190). Accordingly, buying/selling is completed for 1,000 shares of stock of firm X at 500 yen [per share] by the user 1. Furthermore, in cases where an order that allows the trading of the order notice is newly executed in the PTS 3 in the trading system 1A between S120 and S180, since this has already been settled by the PTS 3 earlier, there are cases in which settlement is impossible even if an order notice is performed.

Accordingly, the PTS 3 of the trading system 1A also transmits, via the gateway 4, execution results indicating execution of the corresponding trade to the trading system 1B that transmitted the order instructions (S200). Furthermore, the PTS 3 of the trading system 1A returns an execution notice constituting results indicating that the trading of 1,000 shares of stock of firm X at 500 yen [per share] was completed to the ordering system 2 (S210), and the ordering system 2 transmits an execution notice indicating the purchase of 1,000 shares of stock of firm X at 500 yen [per share] to the user terminal of the user 1.

The gateway 4 receiving the execution results of S200 converts these results to a protocol that allows communications, and transmits the results to the trading system 1B that transmitted the order instructions (S220). Furthermore, the gateway 4 of the trading system 1B that receives the execution results from the gateway 4 of the trading system 1A converts these execution results to the protocol of the trading system 1B, and transfers the execution results to the PTS 3 (S230). By receiving these execution results (results indicating that 1,000 shares of stock of firm X were traded at 500 yen [per share] in the trading system 1A), the PTS 3 of the trading system 1B executes trading of the quantity that could be executed by the trading system 1A (here, 1,000 shares), i.e., the trading of 1,000 shares of stock of firm X at 500 yen [per share] locked in S150, and releases the lock (S240). Here, furthermore, a case was described in which the locking of the locked reverse order was released following the execution of trading on the basis of the execution results; however, it would also be possible to execute trading following the release of the lock.

Furthermore, the PTS 3 of the trading system 1B returns an execution notice constituting results indicating that the trading of 1,000 shares of stock of firm X has been completed at 500 yen [per share] to the ordering system 2 (S250), and the ordering system 2 transmits an execution notice indicating that 1,000 shares of stock of firm X have been sold at 500 yen [per share] to the user terminal of the user who placed the sell order.

Furthermore, if only this buying/selling is executed, there are still 500 shares of stock of firm X that have not been bought among the shares of the buy order of the user 1. Accordingly, the PTS 3 of the trading system 1B waits for a specified time until a reverse order that allows buying/selling to be executed for the order notice received from the trading system 1 is received from the ordering system 2 of the trading system 1B.

Furthermore, as was described above, in cases where the trading system 1A also transmits an order notice to other trading systems besides the trading system 1B (the trading systems 1C through 1E), the processing is simultaneously performed. Then, the processing from S140 on is similarly repeated.

For example, in cases where there is a market sell order for 2,000 shares of stock of firm X in the trading system 1C besides the trading system 1B, the order notice transmitted from the trading system 1A is received by the gateway 4 of the trading system 1C (S130), and the gateway 4 transfers this order notice to the PTS 3 (S140) after converting the order notice to the protocol used in the trading system 1. Then, when the PTS 3 of the trading system 1C receives this order notice from the gateway 4, the PTS 3 performs a search in order to ascertain whether or not there is a reverse order (S150). In this case, since there is a market sell order for 2,000 shares (reverse order), this order (market sell order for 2,000 shares) is locked.

Then, the PTS 3 of the trading system 1C transfers order instructions (order) for a market sell order for 2,000 shares of stock of firm X to the gateway 4 (S160).

The gateway 4 of the trading system 1C receiving these order instructions converts the instructions to a protocol that allows specified communications, and then transmits these order instructions (order) to the trading system 1A (S170). The gateway 4 of the trading system 1A receiving the order instructions (order) from the gateway 4 of the trading system 1C converts the order instructions (order) to the protocol of the trading system 1A, and then transfers the order instructions to the PTS 3 (S180).

The PTS 3 of the trading system 1A completes buying/selling for 500 shares on the basis of the order instructions received from the gateway 4 (selling of 2,000 shares of stock of firm X at the market price) among the buy order for 500 shares of stock of firm X at 500 yen [per share] stored from before (S190). In this way, buying/selling is completed for 500 shares of stock of firm X at 500 yen [per share] for the user 1.

Accordingly, the PTS 3 of the trading system 1A transmits execution results for 500 shares via the gateway 4 to the trading system 1C that transmitted the order instructions (S200). Furthermore, the PTS 3 of the trading system 1A returns an execution notice constituting results indicating the completion of buying/selling for 500 shares of stock of firm X at 500 yen [per share] to the ordering system 2 (S210), and the ordering system 2 transmits an execution notice indicating the purchase of 500 shares of stock of firm X to the user terminal of the user 1.

Furthermore, the gateway 4 receiving the execution results of S200 converts these execution results to a protocol that allows communications, and then transmits the execution results to the trading system 1C that transmitted the order instructions (S220). Furthermore, the gateway 4 of the trading system 1C receiving the execution instructions from the gateway 4 of the trading system 1A converts these execution instructions to the protocol of the trading system 1C, and transmits the execution results to the PTS 3 (S230). By receiving these execution results, the PTS 3 of the trading system 1C executes a trade for 500 shares in the execution results for the market sell order of 2,000 shares of stock of firm X locked in S150 (S240), and releases the lock of the locked order. In other words, a market order for 1,500 shares is stored in the PTS 3 of the trading system 1C. Then, the PTS 3 of the trading system 1C returns an execution notice to the ordering system 2 constituting results indicating that a trade has been partially completed for 500 shares of stock of firm X at 500 yen [per share] (S250). And the ordering system 2 transmits an execution notice indicating that 500 shares of stock of firm X have been sold at 500 yen [per share] to the user terminal of the user performing the sell order.

In this way, buying/selling is completed for all of the buy orders of the user 1 for 2,000 shares of stock of firm X at 500 yen [per share]. Specifically, buying/selling is completed for 500 shares in the trading system 1A, 1,000 shares in the trading system 1B, and 500 shares in the trading system 1C. Thus, by using the present invention, it is possible to increase the possibility of completing trades by expanding the trading that could only be performed in one trading system 1 in the past to other trading systems 1 as well.

Furthermore, it is advisable that the order notices, order instructions, and execution results that are transmitted and received among the respective trading systems 1 also be transmitted to the log server 5 in addition to being transmitted to the partner trading systems 1. By storing the communications content in this log server 5, it is possible to solve problems in cases where communications errors occur, or in cases where there is system trouble such as different processing being performed between trading systems 1, e.g., inquiries, instructions, or the like.

Furthermore, in cases where a plurality of orders with the same order conditions (same name, marketing division, indicated price, conditions of execution, and the like) are present in the PTS 3 in the trading systems 1, when order notices in the PTS 3 are transferred to the gateway 4 in one or a plurality of other trading systems 1 in which a reverse order may be present, it is advisable that a plurality of orders with these same order conditions be summarized and transferred as a single order notice. For example, in a case where there is a sell order for 1,000 shares of stock of firm X at 500 yen [per share] placed by the user 1 and a sell order for 2,000 shares of stock of firm X at 500 yen [per share] placed by the user 2 in the PTS 3, the PTS 3 summarizes the respective orders of the user 1 and user 2 in a single order notice; i.e., a sell order for 3,000 shares of stock of firm X at 500 yen [per share], and transfers this order notice to the gateway 4. By thus summarizing the order notices using a network, it is possible to reduce traffic, and thus reduce the system load on the other trading systems 1.

Furthermore, in cases where the trading system 1 that has sent the order notice (e.g., the trading system 1A) receives order instructions from another trading system 1 (e.g., the trading system 1B), the PTS 3 of the trading system 1A executes buying/selling by assigning the order instructions to the respective orders of the user 1 and user 2 by a specified method. For example, in a case where the order instructions of the trading system 1B constitute a buy order for 2,500 shares of stock of firm X at 500 yen [per share], buying/selling is executed beginning with whichever user ordered first between the user 1 and user 2. For instance, in a case where the user 1 placed an order before the user 2, buying/selling of 1,000 shares for the user 1 is performed [first], and then buying/selling of 1,500 shares for the user 2 is performed.

The specified method used may be any of various methods; for example, besides performing buying/selling from the order that was placed first, buying/selling may be proportionally performed in accordance with the ratio of the numbers of shares in the order notices, buying/selling may be performed beginning with the user showing large share buying/selling amounts or buying/selling opportunities in the trading system 1 within a specified time, or buying/selling may be performed beginning with the user showing the largest or smallest number of shares ordered.

In cases where buying/selling is performed in this way by the trading system 1A, the execution results of the user 1 and user 2 may be transferred to the gateway 4 as separate execution results, and transmitted to the trading system 1B, or the execution results of the user 1 and user 2 may be summarized as a single set of execution results, transferred to the gateway 4, and transmitted to the trading system 1B. In the example described above, in cases where the execution results are not summarized as a single set of results, the PTS 3 of the trading system 1A transfers 1,000 shares of stock of firm X constituting the buying/selling results for the user 1 as execution results, and 1,500 shares of stock of firm X constituting the buying/selling results for the user 2 as execution results, to the respective gateways 4, and transmits these results to the trading system 1B. The trading system 1B receives the respective execution results, and buying/selling is executed by the PTS 3 on the basis of the respective execution results. On the other hand, in cases where the execution results are summarized as a single set of results, 2,500 shares of stock of firm X constituting the buying/selling results for the user 1 and user 2 are transferred to the gateway 4 by the PTS 3 of the trading system 1A as execution results, and are transmitted to the trading system 1B. The trading system 1B receives these execution results, and buying/selling is executed by the PTS 3.

Thus, by summarizing the order notices and execution results into single notices or sets of results via the network, it is possible to reduce traffic compared to cases where these data are handled separately in bulk; furthermore, the system load on the other trading systems 1 can be reduced.

### INDUSTRIAL APPLICABILITY

By transmitting and receiving buying/selling information among trading systems independently provided by various firms as in the invention described above, in cases where reverse orders are present in other trading systems, it is possible to complete the buying/selling with these trading systems even in cases where buying/selling cannot be completed by a firm's own trading system. In this way, independent trading systems can be activated, and this also makes it possible to utilize trading systems of firm members or the like in which trading via a specified exchange is difficult during trading hours.

## Claims

1. A trading method for trading between a first trading system and one or more other second trading systems for trading products, wherein said trading method is **characterized in that**:
said first trading system transmits to said second trading system, at a specified timing, an order notice indicating that a buy/sell order is present in said first trading system in a case where the buy/sell order for said commercial product received by said first trading system is not executed within a specified time by said first trading system;
said second trading system receiving said order notice from said first trading system performs a search in order to ascertain whether or not a reverse order for the order in said order notice is present in said second trading system, and, in a case where such a reverse order is present, said second trading system locks the reverse order in said second trading system, and transmits an order instruction to said first trading system according to said reverse order;
said first trading system receiving said order instruction from said second trading system executes buying or selling for said order instruction in an order quantity effective at that point in time in said buy/sell order, and transmits an execution result of said order instructions to said second trading system; and
said second trading system receiving said execution result from said first trading system executes buying or selling of the quantities executed by said first trading system in said locked reverse order on the basis of said execution result.

2. The method for trading among a plurality of trading systems according to claim 1, wherein said method is **characterized in that** said second trading system
receives said order notice from said first trading system;
stores said order notice in a case where no reverse order is found to be present as a result of a search made for reverse orders; and
performs another search in a case where a new order, an alteration of an existing order, the elapsing of a specific amount of time, or another specified event has occurred in said second trading system, in order to ascertain whether said new order or existing order is a reverse order.

3. The method for trading among a plurality of trading systems according to claim 1 or 2, wherein said method is **characterized in that**
said second trading system executes buying/selling in the quantity executed by said first trading system in said locked reverse order on the basis of said execution results, and then releases said lock.

4. The method for trading among a plurality of trading systems according to claim 1 or 2, wherein said method is **characterized in that**
said second trading system unlocks the lock on said locked reverse order, and then executes buying/selling in the quantity executed by said first trading system in said reverse order, on the basis of said execution results.

5. The method for trading among a plurality of trading systems according to claim 1, wherein said method is **characterized in that**
in a case where a plurality of buy/sell orders with the same order conditions are present in said first trading system, said first trading system groups these orders into a single order, and transmits this order as a single order notice to said second trading system.

6. The method for trading among a plurality of trading systems according to claim 1, wherein said method is **characterized in that**
when said first trading system and second trading system transmit information to a trading system that is a destination for transmitting the information, these trading systems also transmit this information to a log server.

7. A trading system for products which has an ordering system, a PTS, and a gateway, wherein said trading system is **characterized in that**
said ordering system receives information relating to a buy/sell order for said products from a user terminal used by a user, and transfers this information to said PTS;
said PTS transfers, at a specific timing, an instruction to said gateway to send an order notice indicating that said buy/sell order is present to another trading system in a case where the buying/selling of said order cannot be completed in said PTS;
said gateway transmits said order notice to at least one of said other trading systems on the basis of an instruction to send said order notice, and when the result is that said gateway receives an order instruction for a reverse order with respect to said order,
said PTS executes buying/selling for said order instructions at an order quantity that is effective in said buy/sell order at that point in time, and transfers an execution result for said order instruction to said gateway; and
said gateway transmits said execution result to said other trading systems.

8. A trading system for a product having an ordering system, a PTS, and a gateway, wherein said trading system is **characterized in that**
said ordering system receives information relating to a buy/sell order for said product from a user terminal used by a user, and transfers this information to said PTS;
said gateway receives from another trading system an order notice indicating that a reverse order for a buy/sell order is present in said other trading system;
said PTS performs a search in order to ascertain whether or not a reverse order for said order notices is present, and, in a case where a reverse order is present, the PTS locks the reverse order, and transfers an order instruction based on said reverse order to said gateway;
said gateway transmits said order instruction to said other trading system, and, in a case where said order instruction is transmitted to said other trading system as a result for said order notice, said gateway receives an execution result for said order instruction from said other trading system, and transfers the execution result to said PTS; and
on receiving the execution result for said order instruction from said gateway, said PTS executes buying/selling in a quantity executed by said other trading systems in said locked reverse order on the basis of said execution result.

9. The trading system according to claim 8, **characterized in that** said PTS
receives said order notice from said other trading system via said gateway;
stores said order notice in a case where no reverse order is found to be present as a result of a search for a reverse order; and
performs another search in a case where a new order, an alteration of an existing order, the elapsing of a specific amount of time, or another specified event has occurred in said PTS, in order to ascertain whether said new order or existing order is a reverse order.

10. The trading system according to claim 8 or 9, **characterized in that** said PTS releases said lock after executing buying/selling in the quantity executed by said other trading systems in said locked reverse order on the basis of said execution result.

11. The trading system according to claim 8 or 9, **characterized in that** said PTS executes buying/selling in the quantity executed by said other trading systems in said reverse order after releasing the lock on said locked reverse order on the basis of said execution result.

12. The trading system according to claim 7, **characterized in that** in a case where a plurality of buy/sell orders with the same order conditions are present in said PTS, said PTS groups these orders into a single order, and transmits this single order as a single order notice to said other trading systems.

13. The trading system according to claim 7 or claim 8, **characterized in that** when said gateway transmits information to the gateways of said other trading systems, said gateway also transmits this information to a log server.

14. The trading system according to claim 7 or claim 8, **characterized in that**
when transmitting information to said other trading systems, said gateway converts the information to a predetermined communications protocol and transmits the converted information to said other trading systems; and
when receiving information from said other trading systems, said gateway converts the information to a protocol used in said trading systems, and transfers the converted information to said PTS.
